# EUROPÄISCHE PATENTSCHRIFT

(11) **EP 3 501 655 B1**
(45) Veröffentlichungstag und Bekanntmachung des Hinweises auf die Patenterteilung: **18.05.2022**
(21) Anmeldenummer: 18215662.0
(22) Anmeldetag: 21.12.2018
(51) Int. Cl.: B01L 3/02

(54) **PROBENVERTEILSYSTEM UND VERFAHREN ZUM VERTEILEN VON PROBEN**
SAMPLE DISTRIBUTION SYSTEM AND METHOD FOR DISTRIBUTING SAMPLES
SYSTÈME DE DISTRIBUTION D'ÉCHANTILLONS ET PROCÉDÉ DE DISTRIBUTION D'ÉCHANTILLONS

(30) Priorität: 21.12.2017 CH 15832017
(43) Veröffentlichungstag der Anmeldung: 26.06.2019
(73) Patentinhaber: INTEGRA Biosciences AG, 7205 Zizers (CH)
(72) Erfinder: Müller, Garry, 7023 Haldenstein (CH); Städler, Andreas, 7012 Felsberg (CH)
(74) Vertreter: Riederer Hasler & Partner Patentanwälte AG

(56) Entgegenhaltungen:
- EP-A2- 0 114 686
- WO-A1-91/17445
- WO-A2-02/16036
- US-A1- 2015 093 834

## Beschreibung

Die Erfindung betrifft ein Probenverteilsystem gemäss Oberbegriff des Anspruchs 1 sowie ein Verfahren zur Verteilung von Proben gemäss Oberbegriff des Anspruch 10.

Probenverteilsystems sind aus dem Stand der Technik bekannt und diese werden typischerweise in Laboren verwendet. Diese Probenverteilsysteme arbeiten meist mit Pipetten, die zum Dosieren von Flüssigkeiten dienen. Es gibt automatisierte Pipettensysteme und handgehaltene und/oder handbedienbare Pipetten. Alle diese Geräte weisen einen Probenbehälter auf, in welchen eine meist flüssige, zu pipettierende Probe aufgenommen und aus welchem diese wieder abgegeben werden kann.

Die Aufnahme und Abgabe einer Probe kann beispielsweise dadurch erreicht werden, dass im Probenbehälter zur Aufnahme der Probe ein Unterdruck und zur Abgabe der Probe ein Überdruck erzeugt wird. Kolbenhubpipetten besitzen zu diesem Zweck beispielsweise einen beweglichen Kolben, wobei zwischen der zu pipettierenden Probe und dem Kolben eine Luftsäule angeordnet ist. Bei Bewegung des Kolbens in eine erste Richtung verdrängt der Kolben die Luftsäule, während er bei Bewegung in eine der ersten Richtung entgegengesetzte zweite Richtung die Luftsäule und damit auch die zu pipettierende Probe in den Probenbehälter zieht.

Um eine Kontamination zu vermeiden, können Pipetten mit auswechselbaren Probenbehältern in der Form von Pipettenspitzen ausgerüstet sein. Die Pipette verfügt dann über einen Verbindungsabschnitt, auf den die Pipettenspitze aufgesteckt und von dem sie nach Gebrauch wieder entfernt werden kann. Die Pipettenspitze weist üblicherweise zwei Öffnungen auf, wobei der Verbindungsabschnitt beim Aufstecken in die grössere der beiden Öffnungen aufgenommen wird und diese verschliesst. Die Aufnahme und Abgabe der Probe erfolgt durch die kleinere Öffnung. Da nur die Pipettenspitze mit der zu pipettierenden Probe in Berührung kommt, ist eine Kontamination bei nachfolgenden Pipettiervorgängen verhindert. Die Pipettenspitze ist üblicherweise ein Wegwerfartikel aus Kunststoff.

Neben den rein mechanischen existieren auch elektronisch gesteuerte Pipetten. Ausserdem können Pipetten einen (bei Einkanalpipetten) oder mehrere (bei Mehrkanalpipetten) Verbindungsabschnitte aufweisen. Mehrere Verbindungsabschnitte, die jeweils mit einer wechselbaren Pipettenspitze bestückt werden können, erlauben das gleichzeitige Aufnehmen und Abgeben mehrerer Proben. Die zum Einsatz kommenden Abwurfmechanismen besitzen üblicherweise einige Gemeinsamkeiten. Dazu gehört ein Schieber, der entlang des Verbindungsabschnitts beweglich ausgebildet ist. Bei Betätigung des Abwurfmechanismus wird der Schieber in Richtung der Pipettenspitze bewegt, tritt mit dieser in Kontakt und schiebt sie entgegen der Aufsteckrichtung vom Verbindungsabschnitt. Oftmals ist der Abwurfmechanismus mittels eines Bedienelements von Hand betätigbar. Es sind jedoch auch automatisierte Abwurfmechanismen bekannt, welche beispielsweise durch elektrische oder pneumatische Antriebe betrieben werden. In jedem Fall wird dabei eine Kraft mechanisch auf den Schieber übertragen, um so dessen Bewegung in Richtung der Pipettenspitze zu bewirken. Der Teil des Abwurfmechanismus, der die Verbindung zwischen Bedienelement oder Antrieb und Schieber herstellt, kann unterschiedlich ausgestaltet sein, weist jedoch im Allgemeinen ein oder mehrere bewegliche Glieder auf. Die Bewegung der Glieder ist mit der Bewegung des Schiebers gekoppelt. Zweckmässigerweise sind die Glieder zur Übertragung der beim Betätigen auf das Bedienelement ausgeübten Kraft oder der durch den Antrieb ausgebübten Kraft auf den Schieber ausgebildet.

Insbesondere bei automatisierten Probenverteilsystemen, wie beispielsweise Pipettierrobotern mit automatischen Abwurfmechanismen für die Pipettenspitzen ist es bekannt, den erfolgten Abwurf durch spezielle, mechanisch ausgeführte und im Bereich des Verbindungsabschnittes angebrachte Sensoren zu überwachen. Hierzu ist in der Regel direkt im Bereich des Verbindungsabschnittes zwischen Pipettiereinheit und Pipettenspitze ein Schieber und ein Sensor angeordnet, mit deren Hilfe die Anwesenheit einer Pipettenspitze gemessen wird. Pro Pipettenspitze ist folglich eine eigene Messeinheit notwendig, um den Abwurf zu überwachen. Weiters ist ein häufiges Problem beim Abwurf der Pipettenspitzen, dass diese zwar vom Verbindungsabschnitt gelöst werden, aber nicht vollständig abfallen, weil diese beispielsweise durch elektrostatisehe Kräfte hängen bleiben. Solche hängen gebliebenen Pipettenspitzen sind für die bekannten mechanischen Sensoren nicht erkennbar. Der ordnungsgemässe Abwurf der Pipettenspitzen und damit die korrekte Überwachung dieses Vorgangs ist generell für das Pipettieren eine kritische Funktion. Wenn nämlich kontaminierte Pipettenspitzen das Pipettierdeck mit den Proben berühren, müssen alle zuvor gemachten Proben bzw. Ergebnisse als hinfällig betrachtet werden.

Die EP-A-0 114 686 beschreibt eine Vorrichtung und ein Verfahren zum Behandeln von flüssigen Proben, die eine wechselseitige Kontamination oder Fehler beim Handhaben kleiner Flüssigkeitsproben während des Einfüllens, Übertragens oder Mischens derartiger Flüssigkeitsproben durch wiederholte Verwendung der gleichen Pipette vermeiden helfen. Zur Lösung des Problems ist vorgeschlagen, eine Einrichtung zum Lösen des Spitzenelements vom Zylinder vorzusehen, so daß ein anderes Pipettenspitzenelement selektiv und automatisch nach jedem Einführen in die Flüssigkeit in einem Probenbehälter gewechselt werden kann, um eine wechselweise Kontamination beim Übertrag aufeinanderfolgender Proben durch Restflüssigkeit an einem Pipettenspitzenelement zu verhindern. Zusätzlich ist vorgeschlagen, einen Sensor an der Vorrichtung vorzusehen, um feststellen zu können, ob an allen Verbindungsabschnitten Pipettenspitzen aufgenommen wurden oder nicht. Zu diesem ist eine LED-Diode auf der einen Seite und ein Empfänger auf der anderen Seite des Tisches in Richtung der Pipettenreihe angeordnet.

Die WO 02/16036 offenbart einen Pipettierkopf für einen Roboter, der mit mehreren Pipettenspitzen versehen ist. Er weist ein Verbindungsteil, das starr an einen Roboterarm befestigbar ist, und ein Pipettenteil auf, an dem mehrere Pipettenspitzen befestigbar sind. Zum Überprüfen, ob auf alle Pipettenadapter eine Pipettierspitze aufgesetzt worden ist, wird der Pipettierkopf mit den Pipettenadaptem durch Öffnungen, die in einer separaten Platte vorgesehen sind, abgesenkt. Unterhalb der Platte sind jeder Öffnung zugeordnet jeweils eine Lichtschranke vorgesehen. Sollte an einem Pipettenadapter keine Pipettierspitze befestigt sein, so wird dies durch eine der vielen Lichtschranken detektiert. Wird hingegen festgestellt, dass an allen Pipettenadaptern Pipettenspitzen sitzen, wird der Pipettierkopf zum Pipettieren frei gegeben.

Es ist deshalb eine Aufgabe der vorliegenden Erfindung, ein verbessertes Probenverteilsystem und ein verbessertes Verfahren zum Verteilen von Proben bereitzustellen. Hierbei soll insbesondere der Abwurfmechanismus in der Weise verbessert werden, dass der ordnungsgemässe Abwurf der Pipettenspitzen zuverlässig überwacht werden kann und dementsprechend Fehler beim Abwurf zuverlässig erkannt werden können. Gelöst wird diese Aufgabe durch ein Probenverteilsystem mit den Merkmalen des Anspruch 1. Vorteilhafte Ausgestaltungen werden in den abhängigen Ansprüchen 2-9 beschrieben. Weiters wird diese Aufgabe durch ein Verfahren mit den Merkmalen des Anspruch 10 gelöst. Vorteilhafte Ausgestaltungen des Verfahrens sind in den abhängigen Ansprüchen 11-15 beschrieben.

Unter Pipettiervorgang ist die Aufnahme insbesondere einer Flüssigkeit in Pipetten und die Verteilung bzw. Abgabe der Flüssigkeit auf einem Probenbehälter zu verstehen, welcher in der Regel eine Vielzahl von kleinen Töpfen aufweist.

Das erfindungsgemässe Probenverteilsystems und das erfindungsgemässe Verfahren sind in der Lage quasi von aussen auf die Pipettiereinheit zu blicken und können daher in vorteilhafter Weise ermitteln, ob eine Pipettenspitze ordnungsgemäss abgeworfen wurde oder nicht. Ausserdem ist es möglich zu überwachen, ob eine Pipettenspitze fehlt bzw. ob alle Pipettenspitzen vorhanden sind, das heisst, ob alle Pipettenspitze ordnungsgemäss aus einem Vorratsbehälter für Pipettenspitzen aufgenommen wurden. Ausserdem kann die Form und die Lage der Pipettenspitzen insbesondere relativ zur Pipettiereinheit geprüft werden.

In einer ersten Ausführungsform der Erfindung sind die Sensoreinheit und die Pipettiereinheit relativ zueinander beweglich ausgeführt, um auf das Vorhandensein einer Pipettenspitze zu schliessen, wenn sich diese im Detektionsbereich der Sensoreinheit befindet.

Der Sensoreinheit kann ein Zähler zugeordnet sein, um die Anzahl der Pipettenspitzen zu ermitteln. Der Detektionsbereich der Sensoreinheit ist im einfachsten Fall durch einen einzigen Lichtstrahl oder Lichtpuls gebildet. Möglich wäre aber auch der Einsatz von Lichtschranken, die als Lichtgitter ausgebildet sind und die eine Mehrzahl an Lichtstrahlen zur Detektion verwenden. Zu beachten ist, dass mit dem Lichtstrahl die einzelnen Pipettenspitzen abgetastet werden, d.h. der Lichtstrahl wird relativ zu den Pipettenspitzen bewegt. Trifft beispielsweise der Lichtstrahl direkt auf eine Pipettenspitze, wird der Strahl nicht zurückreflektiert und es entsteht eine für den Sensor detektierbare Dunkelstelle. Aus der Anzahl der detektierten Dunkelstellen kann daher auf die Anzahl der vorhandenen Pipettenspitzen geschlossen werden. Die exakte Auswertung erfolgt in an sich bekannter Weise mittels entsprechender Verarbeitungsalgorithmen.

In einer weiteren Ausführungsform ist die Sensoreinheit verschwenkbar gelagert, um den Detektionsbereich um die Z-Achse aus einer Startposition in eine Endposition zu verschwenken. Alternativ dazu kann die Sensoreinheit derart verbaut sein, dass die Hauptrichtung des Detektionsbereichs mit der Bewegungsrichtung entlang der X-Achse der Stellvorrichtung einen spitzen Winkel bildet.

Die Sensoreinheit kann ortsunveränderlich bezüglich Grundplatte und somit gegenüber der Behälter im oder am Probenverteilsystem verbaut sein.

Die Sensoreinheit weist in einer Ausführungsform der Erfindung eine Laserdiode zum Aussenden von Lichtpulsen oder Lichtstrahlen und insbesondere eine vor der Laserdiode angeordnete Optik auf, wobei der Lichtpuls oder Lichtstrahl einen Strahldurchmesser aufweist, der kleiner als die kleinste Pipettenspitze an ihrer schmalsten Stelle breit ist. Der Strahldurchmesser definiert folglich die erzielbare Auflösung der Sensoreinheit und muss entsprechend der Kleinheit der Messobjekts - also der Pipettenspitze - gewählt werden.

Vorzugsweise wird die Pipettenspitze nicht beim Bereich des Verbindungsabschnittes detektiert, sondern man ist bestrebt die Überlappung des Detektionsbereichs mit dem schmalen bzw. spitzen Bereich der Pipettenspitze - also mit dem Bereich mit der kleinen Öffnung der Pipettenspitze - zu erkennen. Um hier möglichst schmale Pipettenspitzen erkennen zu können, ist es von Vorteil einen Lichtstrahl mit möglichst kleinem Strahldurchmesser zu verwenden.

Die Sensoreinheit kann so ausgeführt sein, dass sie mit einem Reflektorelement zusammenwirkt, welches am Öffnungsrand wenigstens eines der Behälter angeordnet ist und Lichtstrahlen oder Lichtpulse in Richtung dieses Reflektorelementes aussendet. Hierbei kann das Reflektorelement unmittelbar an den Behälter angebaut sein oder an einem separaten Halter montiert sein.

Die Sensoreinheit ist beispielsweise so angeordnet, dass diese den Detektionsbereich über die Öffnungen der Behälter legt. Um jederzeit die Pipettenspitzen an der Pipettiereinheit überwachen zu können, kann jedem Behälter oder einer Gruppe von Behältern ein Detektionsbereich zugeordnet sein.

Insbesondere um den korrekten Abwurf der Pipettenspitzen überwachen zu können liegt der Detektionsbereich über jenem Behälter, welcher als Abfallbox ausgebildet ist und in den gebrauchte Pipettenspitzen abgeworfen werden.

Die Sensoreinheit kann über ein mastartiges Trägerelement mit der Grundplatte verbunden sein, in die Stellvorrichtung eingebaut oder an die Stellvorrichtung angebaut sein.

In einer vorteilhaften Weiterbildung kann die Sensoreinheit dazu ausgebildet sein, zusätzlich die Überschreitung eines maximal zulässigen Füllstandes insbesondere der Abfallbox zu überwachen. In diese Abfallbox werden die Pipettenspitzen abgeworfen, d.h. die Pipettenspitzen fallen nach dem Abwurf in diese Box. Dabei ist es durchaus möglich, dass die Pipettenspitzen sich ineinander verkeilen und - obwohl die maximale Füllmenge der Box noch nicht erreicht ist - über den Rand der Box hinausragen können. Diese überstehenden Pipettenspitzen liegen im Bereich des Fahrweges der Stellvorrichtung samt Pipettiereinheit und daher kann es zu Kollisionen zwischen abgeworfenen, verkeilten Pipettenspitzen und den auf der Pipettiereinheit aufgesetzten Pipettenspitzen kommen. Dies kann im ungünstigsten Fall zu Kontaminationen der Proben oder zumindest zum Verschieben der aufgesetzten Pipettenspitzen und damit zur Veränderung der Ausrichtung der Pipettenspitzen führen. Nicht ordnungsgemäss ausgerichtete Pipettenspitzen sind kritisch, weil diese beispielsweise nicht mehr die aufgenommene Proben korrekt in die Probentöpfe eines Probenbehälters abgeben können, weil sie wegen ihrer veränderten Ausrichtung bei der Abgabe der Probe nicht exakt über dem entsprechenden Probentopf positioniert sind.

In einer Weiterbildung der Erfindung ist daher der Sensoreinheit eine Auswerteeinheit zugeordnet, die die Position und die Lage der Pipettenspitzen relativ zur Pipettiereinheit ermitteln kann. Hierzu sollte die Detektion der Pipettenspitzen immer an einer exakt gleichen Position erfolgen. Wird nun die Sensoreinheit verschwenkt, wird eine korrekt auf der Pipettiereinheit sitzende Pipettenspitze eines bestimmten Kanals immer exakt bei der gleichen Stellung der Sensoreinheit detektiert werden. Wird die erwartete Pipettenspitze früher oder später detektiert, kann daraus geschlossen werden, dass die Pipettenspitze nicht ordnungsgemäss auf der Pipettiereinheit sitzt und Gegenmassnahmen, wie beispielsweise der Stopp des Pipettiervorganges oder die Ausgabe einer Fehlermeldung können erfolgen. Folglich genügt die Kenntnis der Schwenkposition der Sensoreinheit in und die Kenntnis der Position der Pipettiereinheit während des Detektionsvorganges, um den korrekten Sitz einer Pipettenspitze auf der Pipettiereinheit mittels einer vorzugsweise programmierbaren Auswerteeinheit zu beurteilen. Beispielsweise kann die Auswertung, ob die Form, Lage und Position einer Pipettenspitze in Ordnung ist, mittels einer Laufzeitmessung erfolgen. Es wird also nicht nur die Anzahl der Hell- und Dunkelstellen bewertet, sondern es wird auch bewertet, wie lange die Hell- und Dunkelstellen dauern und es kann für die Auswertung der Signalverlauf mit einer Referenz verglichen werden.

Wird die Sensoreinheit als Alternative zum Verschwenken derart verbaut, dass die Hauptrichtung des Detektionsbereichs mit der Bewegungsrichtung entlang der X-Achse der Stellvorrichtung einen spitzen Winkel bildet, ist eine Detektion nicht ordnungsgemäss sitzender Pipettenspitzen ebenfalls mit Hilfe einer Auswerteeinheit möglich. Während des Detektionsvorganges genügt hierzu die genaue Kenntnis der Position der Stellvorrichtung bezüglich der X-Achse. Wird nämlich an einer vordefinierten Position keine Pipettenspitze erkannt, sondern diese früher oder später detektiert, kann daraus ebenfalls geschlossen werden, dass die Pipettenspitze nicht ordnungsgemäss auf der Pipettiereinheit sitzt.

Auf die gleiche Art und Weise wie eine nicht ordnungsgemäss sitzende Pipettenspitze erkannt werden kann, können auch fehlerhafte Pipettenspitzen mit deformierter Form erkannt werden.

In einer weiteren Weiterbildung kann die Sensoreinheit dazu ausgebildet sein, die minimale Überfahrhöhe der Pipettiereinheit über wenigstens einen der Behälter zu überwachen und in einer weiteren Weiterbildung des Verfahrens kann die minimale Überfahrhöhe der Pipettiereinheit über wenigstens einen der Behälter überwacht werden. Die Überwachung der Überfahrhöhe ist von Vorteil, weil die ohnehin vorhandene Sensoreinheit eine weitere, zusätzlich Überwachungsfunktion übernehmen kann. Damit können sicher Kollisionen zwischen Pipettiereinheit und Behälter vermieden werden. Ausserdem ist es möglich die Überfahrhöhe auf ein Minimum zu begrenzen, d.h. in Abhängigkeit davon, ob an der Pipettiereinheit Pipettenspitzen angebracht sind oder nicht, muss die Pipettiereinheit in grösserer oder kann die Pipettiereinheit in geringerer Höhe über den Behältern verfahren werden. Somit ist eine Optimierung der Verfahrwege der Pipettiereinheit in dem Sinne möglich, als dass kürzest mögliche Verfahrwege mit hoher Sicherheit realisiert werden können. Dies bedeutet eine Zeitersparnis für den einzelnen Pipettiervorgang, was sich bei der Vielzahl von Pipettiervorgängen, welche bei einer Untersuchung durchgeführt werden müssen, zu einer grossen und deutlich spürbaren Zeitersparnis führt.

Ausserdem kann jedem Behälter eine separate Sensoreinheit zugeordnet sein. Hierdurch sind weitere Optimierungen hinsichtlich der Überfahrhöhe möglich, weil die Behälter unterschiedlich hoch sein können und es daher für jeden Behälter einer separaten Überwachung bedarf, um die minimale Überfahrhöhe zu realisieren.

Die Pipettiereinheit kann in einer weiteren Ausführungsform der Erfindung baulich mit der Stellvorrichtung vereinigt sein. Die Pipettiereinheit ist in dieser Ausführung in einen Trägerarm der Stellvorrichtung integriert.

In einer Weiterbildung des erfindungsgemässen Verfahrens wird in einem ersten Prüfschritt geprüft werden, ob alle aufgenommen Pipettenspitzen mit der Pipettiereinheit verbunden sind, und in einem zweiten Prüfschritt wird geprüft, ob alle Pipettenspitzen abgeworfen wurden, wobei zwischen den beiden Prüfschritten die Pipettenspitzen abgeworfen werden.

In einer weiteren Weiterbildung des Verfahrens werden folgende Verfahrensschritte während des ersten und des zweiten Prüfschrittes ausgeführt:
a) Setzen eines Zählers auf Null,
b) Aktivieren der Sensoreinheit durch Aussenden eines Lichtstrahles oder Lichtpulses, wobei Hauptrichtung des Detektionsbereichs mit der Bewegungsrichtung der Pipettiereinheit einen spitzen Winkel bildet,
c) Verfahren der Pipettiereinheit bis eine Pipettenspitze durch Überlappung mit dem Detektionsbereich und die damit verbundene Unterbrechung des Lichtstrahls oder Lichtpulses detektiert wird,
d) Erhöhen der erfassten Pipettenspitzenanzahl im Zähler um eins,
e) Wiederhohlen der Schritte beginnend bei b).

In einer weiteren alternativen Weiterbildung des erfindungsgemässen Verfahrens werden folgende Verfahrensschritte während des ersten oder des zweiten Prüfschrittes ausgeführt:
a) Setzen eines Zählers auf Null und Verschwenken einer Sensoreinheit in eine Startposition,
b) Aktivieren der Sensoreinheit durch Aussenden eines Lichtstrahles oder Lichtpulses,
c) Verschwenken des Lichtstrahls oder Lichtpulses solange bis eine Pipettenspitze durch Überlappung mit dem Detektionsbereich und die damit verbundene Unterbrechung des Lichtstrahls oder Lichtpulses detektiert wird,
d) Erhöhen der erfassten Pipettenspitzenanzahl im Zähler um eins,
e) Wiederhohlen der Schritte beginnend bei b) bis eine Endposition erreicht wurde.

Alternativ kann die Zählung auch dadurch erfolgen, dass zuerst eine Signalfolge aus Hell- und Dunkelstellen ermittelt wird und dass dann diese Signalfolge ausgewertet wird, wobei die Anzahl der Dunkelstellen der Anzahl der Pipettenspitzen entspricht. Dementsprechend kann das erfindungsgemässe Verfahren alternativ zum vorher Gesagten so ausgeführt werden, dass nur die Verfahrensschritte b) und c) ausgeführt werden, um eine Signalfolge aus Hell- und Dunkelstellen zu ermitteln und dass dann die Signalfolge ausgewertet wird, um aus der Anzahl der Dunkelstellen die Anzahl der Pipettenspitzen zu ermitteln.

In einer weiteren vorteilhaften Weiterbildung der Erfindung können folgende Verfahrensschritte während des ersten oder des zweiten Prüfschrittes ausgeführt werden:
a) Auslesen der erfassten Pipettenspitzenanzahl aus dem Zähler,
b) Vergleichen der erfassten Pipettenspitzenanzahl mit der eingesetzten Anzahl an Pipettenspitzen,
c) Start eines neuen Pipettierzyklus bei Übereinstimmung des Zählerstandes mit der Pipettenspitzenanzahl,
d) Ausgeben einer Fehlermeldung bei nicht gegebener Übereinstimmung des Zählerstandes mit der Pipettenspitzenanzahl.

In einer weiteren Ausführungsform der Erfindung werden die Prüfschritte mittels einer Sensoreinheit durchgeführt, die als Lichtschranke ausgeführt ist. Hierbei kann die Sensoreinheit während der Prüfschritte Lichtstrahlen oder Lichtpulse in Richtung eines Reflektorelementes aussenden, wobei die Lichtstrahlen oder Lichtpulse für den Fall, dass keine Pipettespitze im Lichtweg des Lichtstrahls oder des Lichtpulses vorhanden ist, am Reflektorelement reflektiert werden und zur Sensoreinheit zurück gelenkt werden.

Für den Fall, dass im ersten Prüfschritt festgestellt wird, dass nicht alle Pipettenspitzen vorhanden sind, kann erfindungsgemäss vorgesehen sein, dass der gesamte Pipettiervorgang gestoppt wird und eine entsprechende Fehlermeldung ausgegeben wird. Gleich kann verfahren werden, wenn im zweiten Prüfschritt festgestellt wird, dass nicht alle Pipettenspitzen abgeworfen wurden. Auch in diesem Fall wird der gesamte Pipettiervorgang gestoppt und eine entsprechende Fehlermeldung ausgegeben.

Wird die nicht abgeworfene Pipettenspitze manuell entfernt kann der Pipettiervorgang fortgesetzt werden. Vorteilhafterweise geschieht dies insbesondere dann, wenn die Entfernung der nicht abgeworfenen Pipettierspitze durch eine Eingabe an einem Bedienteil des Probenverteilsystems quittiert wird.

In einer Weiterbildung des erfindungsgemässen Verfahren zur Verteilung von Proben kann die Sensoreinheit den Füllstand mit abgeworfenen Pipettenspitzen in der Abfallbox überwachen.

Weitere Vorteile und Merkmale der Erfindung ergeben sich aus aus der nachfolgenden Beschreibung von Ausführungsbeispielen der Erfindung unter Bezugnahme auf schematische Darstellungen.

Es zeigen in nicht massstabsgetreuer Darstellung:.
- Figur 1:: ein erste perspektivische Ansicht eines erfindungsgemässen Probenverteilsystems.
- Figur 2:: eine zweite perspektivische Ansicht eines erfindungsgemässen Probenverteilsystems gemäss Figur 1.

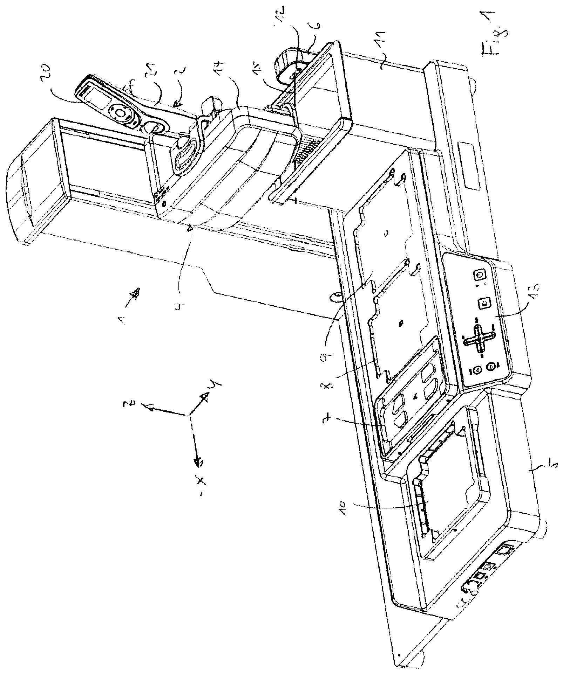

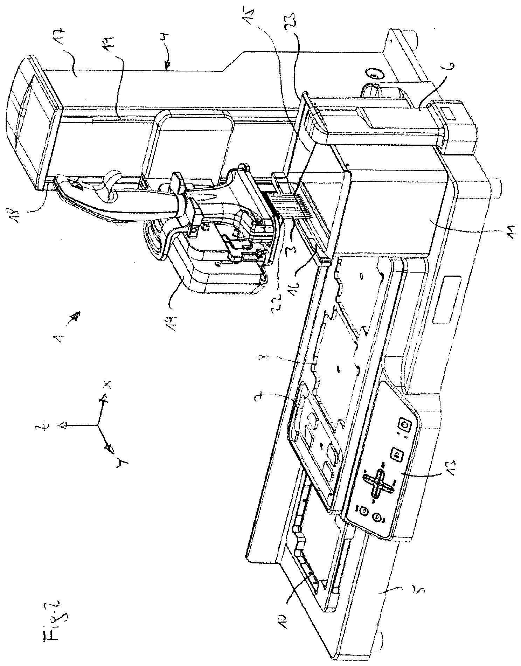

In den Figuren 1 und 2 ist in unterschiedlichen perspektivischen Ansichten ein Ausführungsbeispiel eines erfindungsgemässen Probenverteilsystems 1 dargestellt. Dessen wesentliche Komponenten sind eine Stellvorrichtung 4 und eine Grundplatte 5. Die Stellvorrichtung 4 weist einen L-förmigen Trägerarm 14 auf, der eine Pipettiereinheit 2 aufnimmt. Die Pipettiereinheit ist als Mehrkanalpipette ausgeführt und in der gezeigten Ausführungsform dazu geeignet insgesamt 12 Pipettenspitzen 3 aufzunehmen. Ausserdem weist die Stellvorrichtung 4 einen turmartigen Führungsarm 17 auf, welcher Führungsschlitze 18, 19 aufweist. In diesen Führungsschlitzen kann der Trägerarm 14 bezüglich der nicht dargestellten Probenbehältern angehoben oder gesenkt werden. Anders gesagt, durch die Führungsschlitze 18, 19 der Stellvorrichtung 4 in Verbindung mit dem Trägerarm 14 wird ein Bewegungsspielraum geschaffen, der parallel zur Z-Achse verläuft. Ausserdem ist es möglich die Stellvorrichtung 4 entlang einer auf der Grundplatte 5 befindlichen Gleitfläche in Richtung der X-Achse zu verfahren. Hierbei ist die Stellvorrichtung 4 in einer in Figur 1 nicht sichtbaren Ausnehmung geführt. Die Stellvorrichtung ermöglicht folglich mit einer vorzugsweise im Führungsarm 14 verbauten Antriebseinheit (ist nicht in den Figuren dargestellt), dass die Pipettiereinheit 2 gehoben oder gesenkt werden kann und dass es vor und zurück bewegt werden kann. Somit ist eine relative Positionsänderung der Pipettiereinheit 2 gegenüber den nicht dargestellten Behältern sowie einer Abfallbox 11 möglich.

Über eine Bedienoberfläche 13, welche im Bereich der Vorderseite des Grundplatte 5 angeordnet ist, ist es möglich einen Pipettiervorgang mit einer Vielzahl von Arbeitszyklen zu programmieren. Beim in den Figuren 1 und 2 gezeigten Ausführungsbeispiel ist es auch möglich diese Programmierung am Bedienteil 20, welches sich am Handgriff 21 der Pipettiereinheit 2 befindet, vorzunehmen. Die Grundplatte 5 bildet auch die Basis für die Aufnahme der unterschiedlichen Behälter. Die Behälter als solche sind nicht dargestellt, allerdings sind die Stellflächen 7, 8, 9 und 10 erkennbar. Dort werden die für eine Untersuchung benötigten Behälter platziert. Hierbei sind insbesondere die Stellplätze 8, 9 und 10 für Aufnahme- oder Zielbehälter für Proben bzw. Flüssigkeiten vorgesehen und der Stellplatz 7 wird in der Regel für Vorratsbehälter für Pipettenspitzen verwendet. Aus diesem Vorratsbehälter für Pipettenspitzen können in bekannter Weise automatisiert ungebrauchte Pipettenspitzen 3 von der Pipettiereinheit 2 aufgenommen werden. Hierzu wird die Pipettiereinheit 2 mit Hilfe der Stellvorrichtung 4 über dem Stellplatz 7 bzw. über den nicht dargestellten Vorratsbehälter für Pipettenspitzen platziert und in der Folge abgesenkt bis die freien Enden der Pipettenspitzen 3 mit dem Verbindungsabschnitt 22 der Pipettiereinheit in Eingriff gebracht sind. Die Pipettenspitzen 3 sind somit über den Verbindungsabschnitt 22 mit der Pipettiereinheit 2 verbunden und können für die Aufnahme einer Probe bzw. Flüssigkeit aus einem Aufnahmebehälter und für die anschliessende Verteilung der Probe bzw. Flüssigkeit in Zielbehältern genutzt werden.

Am Ende eines Pipettiervorganges verfährt die Stellvorrichtung 4 die Pipettiereinheit über die Abfallbox 11. Mittels eines nicht dargestellten Mechanismus werden die kontaminierten Pipettenspitzen 3 vom Verbindungsabschnitt 22 abgestreift und die abgestreiften Pipettenspitzen fallen in die Abfallbox.

Dieser Vorgang wird mit einer Sensoreinheit 12 überwacht. Diese Sensoreinheit 12 befindet sich in einem mastartigen Tragarm 6 und ist dort verschwenkbar gelagert. Die Schwenkbewegung ist dabei so ausgerichtet, dass der Detektionsbereich der Sensoreinheit 12, der von einem Lichtstrahl 15 gebildet wird, in der von der X-Achse und der Y-Achse aufgespannten Ebene verschwenkt wird. Der Schwenkbereich beträgt ca.+/- 40° bezogen auf die Mittelstellung der Sensoreinheit 12. In dieser Mittelstellung der Sensoreinheit 12 ist der Detektionsbereich parallel zur X-Achse ausgerichtet. Es ist somit unmittelbar aus Figur 2 erkennbar, dass beim Verschwenken der Sensoreinheit 12 aus einer Startposition, welche bei -40° liegt in eine Endposition mit +40° alle Pipettenspitzen 3 überstrichen werden. In Ausstrahlrichtung der Sensoreinheit 12 gesehen ist hinter den Pipettenspitzen am Öffnungsrand 23 der Abfallbox 11 ein Reflektorelement 16 angeordnet, welches den Lichtstrahl 15 der Sensoreinheit 12 reflektiert und zu einem in der Sensoreinheit befindlichen Empfänger zurück wirft. Befindet sich im Lichtweg des Lichtstrahls 15 eine Pipettenspitze 3, so kann der Lichtstrahl 15 nicht auf das Reflektorelement 16 auftreffen, er wird nicht reflektiert und der Empfänger registriert das Ausbleiben bzw. die Unterbrechung des Lichtstrahls 15. Somit wird aufgrund einer Unterbrechung des Lichtstrahls 15 auf das Vorhandensein einer Pipettenspitze geschlossen. Wird folglich zusammen mit dem Vorgang des Verschwenkens der Sensoreinheit ein Zähler aktiviert, der diese Unterbrechungen erfasst, kann nach Abschluss der Verschwenkbewegung auf die Anzahl der vorhandenen Pipettenspitzen geschlossen werden. Wird bei der Programmierung des Pipettiervorganges angegeben wie hoch die Anzahl der eingesetzten Pipettenspitzen 3 ist, die von der Pipettiereinheit 2 aufgenommen werden können, so kann durch vergleichen der detektierten Anzahl mit der gespeicherten Anzahl festgestellt werden, ob ein Fehler vorliegt oder nicht. Alternativ kann auch die Pipettiereinheit selbst eine Information darüber bereitstellen, wie viele Pipettenkanäle es aufweist. Die Anzahl der vorhandenen Pipettenkanäle entspricht in diesem Fall der Anzahl eingesetzter Pipettenspitzen 3.

Alternativ kann die Sensoreinheit 12 mit dem mastartigen Trägerelement 6 auch an der schmalen Seite der Abfallbox platziert werden. Dementsprechend wird dann auf der gegenüberliegenden schmalen Seite des Abfallbox ein Reflektorelement 16 angebracht. Allerdings macht dann ein Verschwenken der Sensoreinheit 12 kaum Sinn, weil die einzelnen Pipettenspitzen aus Sicht der Sensoreinheit sich mehr oder weniger gegenseitig überdecken und somit nicht eindeutig detektiert werden können. Vielmehr ist es hier notwendig, dass die Austrittsrichtung des Lichtstrahls 15, oder anders gesagt, dass die Hauptrichtung des Detektionsbereichs in einer Art und Weise ausgerichtet ist, dass diese Austrittrichtung einen spitzen Winkel mit der X-Achse einnimmt. Somit läuft der Lichtstrahl quer bzw. beinahe diagonal über die Öffnung der Abfallbox. Um nun die einzelnen Pipettenspitzen detektieren zu können, muss die Pipettiereinheit in X-Richtung verfahren werden. Dadurch überlappt eine Pipettenspitze 3 nach der anderen mit dem Detektionsbereich und können sequentiell detektiert werden. Diese Alternative ist in den Figuren nicht dargestellt.

Eine weitere alternative, nicht dargestellte Ausführungsform kann für das mastartige Trägerelement 6 gewählt werden. Es ist nämlich denkbar, dass das Trägerelement 6 höhenverstellbar ausgeführt wird, um den Detektionsbereich der Sensoreinheit unmittelbar an die Höhe der Behälter anpassen zu können. Mögliche wäre hierzu eine teleskopartige Ausbildung des Trägerelementes vorzusehen.

Die dargestellten Ausführungsbeispiele der Erfindung wurden mit einer Pipettiereinheit 2 in der Form eines Pipettiermoduls beschrieben, welches mit dem Tragarm 14 über ein lösbares Verschlusssystem verbunden ist. Dadurch ist es möglich die Pipettiereinheit 2 aus dem Probenverteilsystem 1 herauszunehmen und als handbedienbare Pipette zu verwenden. Zur Klarstellung sei festgehalten, dass die erfindungsgemässe Idee auch bei Probenverteilsystemen eingesetzt werden kann, bei denen eine Pipettiereinheit fest mit dem Trägerarm verbunden ist bzw. bei denen die Pipettiereinheit baulich mit dem Trägerarm vereinigt ist.

### BEZUGSZEICHENLISTE:

- 1: Probenverteilsystem
- 2: Pipettiereinheit
- 3: Pipettenspitze
- 4: Stellvorrichtung
- 5: Grundplatte
- 6: Mastartiges Trägerelement
- 7: Stellplatz für eine Vorratsbehälter für Pipettenspitzen
- 8, 9, 10: Stellplätze für Aufnahme- oder Zielbehälter
- 11: Abfallbox
- 12: Sensoreinheit
- 13: Bedienoberfläche
- 14: Trägerarm
- 15: Lichtstrahl oder Lichtpuls
- 16: Reflektorelement
- 17: Führungsarm
- 18, 19: Führungsschlitze
- 20: Bedienelement
- 21: Handgriff
- 22: Verbindungsabschnitt
- 23: Öffnungsrand

## Patentansprüche

1. Probenverteilsystem (1)
mit einer Stellvorrichtung (4) zur Aufnahme einer Pipettiereinheit (2) mit wenigstens einer auswechselbaren Pipettenspitze (3), wobei die Stellvorrichtung (4) dazu geeignet ist, die Positionierung der Pipettiereinheit (2) gegenüber einer Grundplatte (5) zu ändern, und
mit einer Sensoreinheit (12), die dazu ausgebildet ist, das Vorhandensein oder das Fehlen von Pipettenspitzen (3) zu detektieren,
wobei die Sensoreinheit (12) als Lichtschranke, insbesondere als Reflexions-Lichtschranke, ausgeführt ist und einen Detektionsbereich aufweist, um die Pipettenspitzen (3) abzutasten, und
die Sensoreinheit (12) und die Stellvorrichtung (4) relativ zueinander beweglich sind, um auf das Vorhandensein einer Pipettenspitze (3) zu schliessen, wenn sich diese im Detektionsbereich der Sensoreinheit (12) befindet,
**dadurch gekennzeichnet,**
**dass** die Sensoreinheit (12) geeignet ist, beim Verschwenken der Sensoreinheit (12) alle Pipettenspitzen (3) zu überstreichen.

2. Probenverteilsystem nach Anspruch 1,
**dadurch gekennzeichnet, dass** der Sensoreinheit (12) ein Zähler zugeordnet ist, um die Anzahl der Pipettenspitzen (3) zu ermitteln.

3. Probenverteilsystem nach einem der vorigen Ansprüche,
**dadurch gekennzeichnet, dass** der Detektionsbereich der Sensoreinheit (12) durch einen einzigen Lichtstrahl oder Lichtpuls (15) gebildet ist.

4. Probenverteilsystem nach einem der vorigen Ansprüche,
**dadurch gekennzeichnet, dass** die Sensoreinheit (12) verschwenkbar gelagert ist,
um den Detektionsbereich um die Z-Achse aus einer Startposition in eine Endposition zu verschwenken.

5. Probenverteilsystem nach einem der vorigen Ansprüche,
**dadurch gekennzeichnet,**
**dass** die Sensoreinheit (12) derart verbaut ist, dass die Hauptrichtung des Detektionsbereichs mit der Bewegungsrichtung parallel zur X-Achse der Stellvorrichtung einen spitzen Winkel bildet.

6. Probenverteilsystem nach einem der vorigen Ansprüche,
**dadurch gekennzeichnet, dass** die Sensoreinheit (12) so angeordnet ist, dass diese den Detektionsbereich über die Öffnungen der Behälter legt.

7. Probenverteilsystem nach einem der vorigen Ansprüche,
**dadurch gekennzeichnet, dass** die Sensoreinheit (12) über ein mastartiges Trägerelement (6) mit der Grundplatte (5) verbunden ist und vorzugsweise in einen Führungsarm (17) der Stellvorrichtung (4) oder an einen Führungsarm (17) der Stellvorrichtung (4) angebaut ist.

8. Probenverteilsystem nach einem der vorigen Ansprüche,
**dadurch gekennzeichnet, dass**
die Stellvorrichtung eine Pipettiereinheit (2) mit mindestens einer Pipettenspitze (3) umfasst und
die Sensoreinheit (12) eine Laserdiode zum Aussenden von Lichtpulsen oder Lichtstrahlen (15) und insbesondere einer vor der Laserdiode angeordneten Optik aufweist, wobei der Lichtpuls oder Lichtstrahl (15) einen Strahldurchmesser aufweist, der kleiner ist als die kleinste Pipettenspitze an ihrer schmalsten Stelle breit ist, und
dass die Sensoreinheit (12) geeignet ist, mit einem Reflektorelement (16) zusammenzuwirken und die Lichtstrahlen oder Lichtpulse (15) in Richtung dieses Reflektorelementes (16) auszusenden,
wobei das Reflektorelement (16) vorzugsweise an einem Öffnungsrand (23) wenigstens eines Behälters angeordnet ist.

9. Probenverteilsystem nach einem der vorigen Ansprüche,
**dadurch gekennzeichnet,**
**dass** die Stellvorrichtung eine Pipettiereinheit (2) mit mindestens einer Pipettenspitze (3) umfasst und
**dass** der Sensoreinheit (12) eine Auswerteeinheit zugeordnet ist, welche geeignet ist, die Lage und Position der Pipettenspitzen (3) bezüglich der Pipettiereinheit (2) sowie die Form der Pipettenspitzen (3) zu beurteilen.

10. Verfahren zur Verteilung von Proben mit einem Probenverteilsystem nach einem der vorigen Ansprüche, das folgende Schritte umfasst:
a) Aufnehmen von Pipettenspitzen (3) mittels einer Pipettiereinheit (2),
b) Durchführen wenigstens eines Pipettiervorganges
c) Verfahren der Pipettiereinheit (2) zu einem Detektionsbereich der Sensoreinheit (12),
d) Bewegen der Pipettiereinheit (2) relativ zur Sensoreinheit, (12) um in einem Prüfschritt durch Abtastung mit einem Lichtstrahl oder Lichtpuls zu prüfen, ob sich eine Pipettenspitze (3) im Detektionsbereich der Sensoreinheit (12) befindet, wobei der Prüfschritt mittels der Sensoreinheit (12) durchgeführt wird, die als Lichtschranke ausgeführt ist,
die Sensoreinheit (12) während des Prüfschrittes Lichtstrahlen oder Lichtpulse (15) in Richtung eines Reflektorelementes (16) aussendet und dass die Lichtstrahlen oder Lichtpulse (15) für den Fall, dass keine Pipettenspitze (3) im Lichtweg des Lichtstrahls oder des Lichtpulses (15) vorhanden ist, am Reflektorelement (16) reflektiert werden und zur Sensoreinheit (12) zurück gelenkt werden.

11. Verfahren zur Verteilung von Proben nach Anspruch 10,
**dadurch gekennzeichnet, dass**
a) in einem ersten Prüfschritt geprüft wird, ob alle aufgenommen Pipettenspitzen (3) mit der Pipettiereinheit (2) verbunden sind,
b) und in einem zweiten Prüfschritt geprüft wird, ob alle Pipettenspitzen (3) abgeworfen wurden,
c) wobei zwischen den beiden Prüfschritten die Pipettenspitzen (3) abgeworfen werden.

12. Verfahren zur Verteilung von Proben nach Anspruch 11,
**dadurch gekennzeichnet,**
**dass** folgende Verfahrensschritte während des ersten und des zweiten Prüfschrittes ausgeführt werden:
a) Setzen eines Zählers auf Null,
b) Aktivieren der Sensoreinheit (12) und Aussenden eines Lichtstrahles oder Lichtpulses (15), wobei die Hauptrichtung des Detektionsbereichs mit der Bewegungsrichtung entlang der X-Achse der Pipettiereinheit (2) einen spitzen Winkel bildet,
c) Verfahren der Pipettiereinheit (2) bis eine Pipettenspitze (3) durch Überlappung mit dem Detektionsbereich und die damit verbundene Unterbrechung des Lichtstrahls oder Lichtpulses (15) detektiert wird,
d) Erhöhen der erfassten Pipettenspitzenanzahl im Zähler um eins,
e) Wiederhohlen der Schritte beginnend bei b).

13. Verfahren zur Verteilung von Proben nach Anspruch 11,
**dadurch gekennzeichnet,**
**dass** folgende Verfahrensschritte während des ersten oder des zweiten Prüfschrittes ausgeführt werden:
a) Setzen eines Zählers auf Null und Verschwenken einer Sensoreinheit (12) in eine Startposition,
b) Aktivieren der Sensoreinheit (12) und Aussenden eines Lichtstrahles oder Lichtpulses (15),
c) Verschwenken des Lichtstrahls oder Lichtpulses (15) solange bis eine Pipettenspitze (3) durch Überlappung mit dem Detektionsbereich und die damit verbundene Unterbrechung des Lichtstrahls oder Lichtpulses (15) detektiert wird,
d) Erhöhen der erfassten Pipettenspitzenanzahl im Zähler um eins,
e) Wiederhohlen der Schritte beginnend bei b) bis eine Endposition erreicht wurde.

14. Verfahren zur Verteilung von Proben nach einem der Ansprüche 12 oder 13, **dadurch gekennzeichnet,**
**dass** die Verfahrensschritte b) und c) ausgeführt werden um eine Signalfolge aus Hell- und Dunkelstellen zu ermitteln und dass diese Signalfolge ausgewertet wird, um aus der Anzahl der Dunkelstellen die Anzahl der Pipettenspitzen zu ermitteln.

15. Verfahren zur Verteilung von Proben nach einem der Ansprüche 11, 12, 13 oder 14,
**dadurch gekennzeichnet,**
**dass** folgende Verfahrensschritte während des ersten oder des zweiten Prüfvorschrittes ausgeführt werden:
a) Auslesen der erfassten Pipettenspitzenanzahl aus dem Zähler,
b) Vergleichen der erfassten Pipettenspitzenanzahl mit der eingesetzten Anzahl an Pipettenspitzen (3),
c) Start eines neuen Pipettierzyklus bei Übereinstimmung des Zählerstandes mit der Pipettenspitzenanzahl,
d) Ausgeben einer Fehlermeldung bei nicht gegebener Übereinstimmung des Zählerstandes mit der Pipettenspitzenanzahl.

## Claims

1. Sample distribution system (1)
with a setting device (4) for receiving a pipetting unit (2) with at least one interchangeable pipette tip (3), wherein the setting device (4) is appropriate to change the positioning of the pipetting unit (2) with respect to a base plate (5) and
with a sensor unit (12) that is configured to detect the presence or absence or the missing of pipette tips (3),
wherein the sensor unit (12) is designed as a light barrier, in particular as a reflection light barrier, and has a detection area to sense the pipette tips (3) and the sensor unit (12) and the setting device (4) are movable relative to one another in order to be suggestive to the presence of a pipette tip (3) if this pipette tip is situated in the detection area of the sensor unit (12),
**characterized in**
**that** the sensor unit (12) is appropriate to scan all pipette tips (3) when pivoting the sensor unit (12).

2. Sample distribution system according to claim 1,
**characterized in that** a counter is associated to the sensor unit (12) to determine the number of pipette tips (3).

3. Sample distribution system according to one of the preceding claims, **characterized in that** the detection area of the sensor unit (12) is formed by a single light beam or light pulse (15).

4. Sample distribution system according to one of the preceding claims, **characterized in that** the sensor unit (12) is pivoted to swivel the detection area about the Z axis from a start position to an end position.

5. Sample distribution system according to one of the preceding claims, **characterized in that** the sensor unit (12) is installed in such a manner that the main direction of the detection area forms an acute angle with the direction of motion parallel to the X axis of the setting device.

6. Sample distribution system according to one of the preceding claims, **characterized in that** the sensor unit (12) is arranged in such a manner that it places the detection area over the openings of the containers.

7. Sample distribution system according to one of the preceding claims, **characterized in that** the sensor unit (12) is connected to the base plate (5) by a mast-like support element (6) and is preferably installed in a guiding arm (17) of the setting device (4) or on a guiding arm (17) of the setting device (4).

8. Sample distribution system according to one of the preceding claims, **characterized in that** the setting device comprises a pipetting unit (2) with at least one pipette tip (3) and the sensor unit (12) has a laser diode for emitting light pulses or light beams (15) and in particular an optic placed in front of the laser diode, wherein the light pulse or the light beam (15) has a beam diameter that is smaller than the width of the smallest pipette tip at its narrowest point and that the sensor unit (12) is appropriate to interact with a reflector element (16) and to emit the light beams or light pulses (15) in direction of this reflector element (16), wherein the reflector element (16) is preferably placed on an opening edge (23) at least of one container.

9. Sample distribution system according to one of the preceding claims, **characterized in that** the setting device comprises a pipetting unit (2) with at least one pipette tip (3) and an evaluating unit is associated to the sensor unit (12), evaluating unit that is appropriate to evaluate the location and position of the pipette tips (3) with respect to the pipetting unit (2) as well as to the shape of the pipette tips (3).

10. Method for the distribution of samples with a sample distribution system according to one of the preceding claims that comprises the following steps:
a) Reception of pipette tips (3) by means of a pipetting unit (2),
b) Performing of at least one pipetting operation,
c) Displacement of the pipetting unit (2) to a detection area of the sensor unit (12),
d) Moving of the pipetting unit (2) with respect to the sensor unit (12) in order to check in a checking step by scanning with a light beam or light pulse if a pipette tip (3) is in the detection area of the sensor unit (12), wherein the checking step is performed by means of the sensor unit (12) that is designed as a light barrier, the sensor unit (12) emits during the checking step light beams or light pulses in direction of a reflector element (16) and that the light beams or light pulses are reflected, in case that no pipette tip (3) is in the light path of the light beam or of the light pulse (15), on the reflector element and are reflected back to the sensor unit (12).

11. Method for the distribution of samples according to claim 10, **characterized in that**
a) it is checked in a first checking step if all the received pipette tips (3) are connected with the pipetting unit (2),
b) and it is checked in a second checking step if all the pipette tips (3) are thrown off.

12. Method for the distribution of samples according to claim 11, **characterized in that** the following method steps are performed during the first and the second checking step:
a) setting of a counter at zero,
b) activating of the sensor unit (12) and emitting of a light beam or light pulse (15), wherein the main direction of the detection area forms an acute angle with the direction of motion along the X axis of the pipetting unit (2),
c) displacement of the pipetting unit (2) until a pipette tip (3) is detected by overlapping with the detection area and the interruption of the light beam or light pulse (15) connected herewith,
d) increasing of the number of detected pipette tips by one,
e) repeating of the steps starting with b).

13. Method for the distribution of samples according to claim 11, **characterized in that** the following method steps are performed during the first and the second checking step:
a) setting of a counter at zero and pivoting of a sensor unit (12) into a starting position,
b) activating of the sensor unit (12) and emitting of a light beam or light pulse (15),
c) pivoting of the light beam or light pulse (15) until a pipette tip (3) is detected by overlapping with the detection area and the interruption of the light beam or light pulse (15) connected herewith,
d) increasing of the number of detected pipette tips by one,
e) repeating of the steps starting with b) until an end position has been reached.

14. Method for the distribution of samples according to one of the claims 12 or 13, **characterized in that** the method steps b) and c) are performed in order to determine a signal sequence of light and dark spots and that the signal sequence is evaluated to detect the number of pipette tips from the number of dark spots.

15. Method for the distribution of samples according to one of the claims 11, 12, 13 or 14,
**characterized in that** that the following method steps are performed during the first or the second checking step:
a) reading out of the number of detected pipette tips from the counter,
b) comparing of the number of detected pipette tips with the number of inserted pipette tips (3),
c) starting of a new pipette cycle if the counter reading coincides with the number of pipette tips,
d) output of an error message if the counter reading does not coincide with the number of pipette tips.

## Revendications

1. Système de distribution d'échantillons (1)
avec un dispositif de réglage (4) pour recevoir une unité de pipetage (2) avec au moins un embout de pipette interchangeable (3), le dispositif de réglage (4) étant approprié pour changer le positionnement de l'embout de pipette (2) par rapport à une plaque de base (5) et
avec une unité de détecteur (12) qui est formée pour détecter l'existence ou le manque d'embouts de pipettes (3),
l'unité de détecteur (12) étant réalisé comme une barrière photoélectrique, en particulier comme une barrière photoélectrique à réflexion, et présentant une zone de détection pour balayer les embouts de pipettes (3) et
l'unité de détecteur (12) et le dispositif de réglage (4) étant mobiles l'un par rapport à l'autre pour conclure à l'existence d'un embout de pipette (3) lorsque celui-ci se trouve dans la zone de détection de l'unité de capteur (12), **caractérisé en ce**
**que** l'unité de capteur (12) est appropriée pour balayer tous les embouts de pipettes lors du pivotement de l'unité de capteur (12).

2. Système de distribution d'échantillons selon la revendication 1, **caractérisé en ce qu'**un compteur est associé à l'unité de capteur (12) pour déterminer le nombre des embouts de pipettes (3).

3. Système de distribution d'échantillons selon l'une des revendications précédentes, **caractérisé en ce que** la zone de détection de l'unité de détecteur (12) est formée par un seul faisceau lumineux ou une seule impulsion lumineuse (15).

4. Système de distribution d'échantillons selon l'une des revendications précédentes, **caractérisé en ce que** l'unité de capteur (12) est positionnée pivotante pour pivoter la zone de détection autour de l'axe Z d'une position de départ à une position finale.

5. Système de distribution d'échantillons selon l'une des revendications précédentes, **caractérisé en ce que** l'unité de capteur (12) est montée de telle manière que la direction principale de la zone de détection forme un angle aigu avec la direction de déplacement parallèlement à l'axe X du dispositif de réglage.

6. Système de distribution d'échantillons selon l'une des revendications précédentes, **caractérisé en ce que** l'unité de capteur (12) est placée de telle manière qu'elle met la zone de détection au-dessus des ouvertures des contenants.

7. Système de distribution d'échantillons selon l'une des revendications précédentes, **caractérisé en ce que** l'unité de capteur (12) est reliée à la plaque de base (5) par un élément porteur de type mât (6) et est montée de préférence dans un bras de guidage (17) du dispositif de réglage (4) ou sur un bras de guidage (17) du dispositif de réglage (4).

8. Système de distribution d'échantillons selon l'une des revendications précédentes, **caractérisé en ce que** le dispositif de réglage comprend une unité de pipetage (2) avec au moins un embout de pipette (3) et l'unité de détecteur (12) présente une diode laser pour émettre des impulsions lumineuses ou des faisceaux lumineux (15) et en particulier une optique placée devant la diode laser, l'impulsion lumineuse ou le faisceau lumineux (15) présentant un diamètre de faisceau qui est inférieur à la largeur du plus petit embout de pipette à son endroit le plus étroit et que l'unité de capteur (12) est appropriée pour interagir avec un élément de réflecteur (16) et pour émettre les faisceaux lumineux ou lesi mpulsions lumineuses ( !5) en direction de cet élément de réflecteur (16), l'élément de réflecteur (16) étant placé de préférence sur un bord d'ouverture (23) au moins d'un contenant.

9. Système de distribution d'échantillons selon l'une des revendications précédentes, **caractérisé en ce que** le dispositif de réglage comprend une unité de pipetage (2) avec au moins un embout de pipette (3) et qu'une unité d'évaluation est associée à l'unité de détecteur (12), unité d'évaluation qui est appropriée pour juger la situation et la position des embouts de pipettes (3) par rapport à l'unité de pipetage (2) ainsi que la forme des embouts de pipettes (3).

10. Procédé pour distribuer des échantillons avec un système de distribution d'échantillons selon l'une des revendications précédentes qui comprend les étapes suivantes :
a) réception d'embouts de pipettes (3) au moyen d'une unité de pipetage (2),
b) exécution d'au moins une opération de pipetage,
c) déplacement de l'unité de pipetage (2) vers une zone de détection de l'unité de capteur (12),
d) déplacement de l'unité de pipetage (2) par rapport à l'unité de capteur (12) pour vérifier dans une étape de vérification par balayage avec un faisceau lumineux ou une impulsion lumineuse si un embout de pipette (3) se trouve dans la zone de détection de l'unité de capteur (12), l'étape de vérification étant exécutée au moyen de l'unité de capteur (12) qui est réalisée comme une barrière photoélectrique,
l'unité de capteur (12) émettant pendant l'étape de vérification des faisceaux lumineux ou des impulsions lumineuses (15) en direction d'un élément de réflecteur (16) et que les faisceau lumineux ou les impulsions lumineuses (15) sont réfléchies sur l'élément réflecteur (16) pour le cas où il n'existe pas d'embout de pipette (3) dans le parcours lumineux du faisceau lumineux ou de l'impulsion lumineuse (15) et soit redirigée vers l'unité de capteur (12).

11. Procédé pour distribuer des échantillons selon la revendication 10, **caractérisé en ce qu'**il
a) est vérifié dans une première étape de vérification si tous les embouts de pipettes reçus (3) sont reliés à l'unité de pipetage (2),
b) et qu'il est vérifié dans une seconde étape de vérification si tous les embouts de pipettes ont été jetés,
c) cependant que les embouts de pipettes (3) sont jetés entre les deux étapes de vérification.

12. Procédé pour distribuer des échantillons selon la revendication 11, **caractérisé en ce que** les étapes de procédé suivantes sont exécutées pendant la première et la seconde étape de vérification :
a) réglage d'un compteur à zéro,
b) activation de l'unité de capteur (12) et émission d'un faisceau lumineux ou d'une impulsion lumineuse (15), la direction principale de la zone de détection forme un angle aigu avec la direction de déplacement le long de l'axe X de l'unité de pipetage (2),
c) déplacement de l'unité de pipetage jusqu'à ce qu'un embout de pipette soit détecté par chevauchement avec la zone de détection et l'interruption du faisceau lumineux ou de l'impulsion lumineuse (15) qui lui est liée,
d) augmentation du nombre détecté d'embouts de pipettes dans le compteur d'un,
e) répétition des étapes en commençant par b).

13. Procédé pour distribuer des échantillons selon la revendication 11, **caractérisé en ce que** les étapes de procédé suivantes sont exécutées pendant la première ou la seconde étape de vérification :
a) mise d'un compteur à zéro et pivotement d'une unité de capteur (12) dans une position de démarrage,
b) activation de l'unité de détecteur (12) et émission d'un faisceau lumineux ou d'une impulsion lumineuse (15),
c) pivotement du faisceau lumineux ou de l'impulsion lumineuse (15) jusqu'à ce qu'un embout de pipette soit détecté par chevauchement avec la zone de détection et l'interruption du faisceau lumineux ou de l'impulsion lumineuse (15) qui lui est liée,
d) augmentation du nombre détecté d'embouts de pipettes dans le compteur d'un,
e) répétition des étapes en commençant par b) jusqu'à ce qu'une position finale soit atteinte.

14. Procédé pour distribuer des échantillons selon l'une des revendications 12 ou 13, **caractérisé en ce que** les étapes de procédé b) et c) sont exécutées pour détecter une séquence de signaux d'endroits clairs et foncés et que cette séquence de signaux est évaluée pour déterminer le nombre d'embouts de pipettes à partir du nombre d'endroits foncés.

15. Procédé pour distribuer des échantillons selon l'une des revendications 11, 12, 13 ou 14, **caractérisé en ce que** les étapes de procédé suivantes sont exécutées pendant la première ou la seconde étape de vérification :
a) lecture du nombre d'embouts de pipettes détecté par le compteur,
b) comparaison du nombre d'embouts de pipettes détecté avec le nombre d'embouts de pipettes (3) mis en opération,
c) démarrage d'un nouveau cycle de pipetage lors de la coïncidence de la valeur du compteur avec le nombre d'embouts de pipettes,
d) émission d'un message d'erreur si la valeur du compteur ne coïncide pas avec le nombre d'embouts de pipettes.
